(19) Europäisches Patentamt
European Patent Office
Office européen des brevets

(11) **EP 1 208 364 B1**

(12) **EUROPÄISCHE PATENTSCHRIFT**

(45) Veröffentlichungstag und Bekanntmachung des Hinweises auf die Patenterteilung:
**15.09.2010   Patentblatt 2010/37**

(51) Int Cl.:
***G01L 23/22*** *(2006.01)*

(21) Anmeldenummer: **00982923.5**

(22) Anmeldetag: **26.09.2000**

(86) Internationale Anmeldenummer:
**PCT/DE2000/003339**

(87) Internationale Veröffentlichungsnummer:
**WO 2001/023859 (05.04.2001 Gazette 2001/14)**

(54) **VERFAHREN ZUR KLOPFERKENNUNG**

METHOD FOR DETECTING KNOCKING

PROCEDE DE DETECTION DE CLIQUETIS

(84) Benannte Vertragsstaaten:
**AT BE CH CY DE DK ES FI FR GB GR IE IT LI LU MC NL PT SE**

(30) Priorität: **28.09.1999   DE 19946346**

(43) Veröffentlichungstag der Anmeldung:
**29.05.2002   Patentblatt 2002/22**

(73) Patentinhaber: **ROBERT BOSCH GMBH**
**70442 Stuttgart (DE)**

(72) Erfinder:
• **FRANKE, Steffen**
**Brentwood CM14 5BT,**
**Essex (GB)**
• **TORNO, Oskar**
**71701 Schwieberdingen (DE)**

• **HEINSTEIN, Axel**
**71299 Wimsheim (DE)**
• **KLUTH, Carsten**
**70469 Stuttgart (DE)**
• **HAEMING, Werner**
**74861 Neudenau (DE)**
• **BAEUERLE, Michael**
**71706 Markgroeningen (DE)**

(56) Entgegenhaltungen:

| | |
|---|---|
| EP-A- 0 529 786 | DE-A- 3 016 117 |
| DE-A- 3 313 036 | DE-A- 4 132 096 |
| DE-A- 4 332 711 | DE-A- 19 549 175 |
| DE-A1- 3 313 036 | DE-A1- 3 313 036 |
| JP-A- 6 249 047 | JP-A- 06 249 047 |
| US-A- 4 481 924 | US-A- 4 770 143 |
| US-A- 4 770 143 | US-A- 4 770 144 |
| US-A- 4 770 144 | US-A- 5 811 667 |
| US-A- 5 811 667 | |

EP 1 208 364 B1

## Beschreibung

Die Erfindung geht aus von einem Verfahren zur Klopferkennung bei einer Brennkraftmaschine nach der Gattung des Anspruchs 1.

Stand der Technik

Es ist bekannt, daß bei Brennkraftmaschinen mit einer Klopfreglung Klopfsensoren eingesetzt werden, die Ausgangssignale abgeben, die Erkennen lassen, ob eine klopfende Verbrennung vorliegt oder nicht. Zur Klopferkennung werden beispielsweise Körperschallsensoren eingesetzt, wobei es Ausführungsformen mit einem einzigen Klopfsensor, mit zwei Klopfsensoren, die an vorgebbaren Stellen des Motorblocks angebracht sind, oder mit einem Klopfsensor für jeden Zylinder gibt. Das Problem bei der Auswertung der von den Klopfsensoren gelieferten Signalen besteht darin, das vom Klopfen verursachte Signal von dem von den übrigen Geräuschen erzeugten Signalen zu trennen. Da sowohl das Klopfsignal als auch das Hintergrundsignal von verschiedenen Betriebsbedingungen der Brennkraftmaschine abhängt, ist es bereits bekannt, die Klopfauswertung abhängig von der Drehzahl der Brennkraftmaschine durchzuführen.

Bei einer aus der DE-P 43 32 711 bekannten Einrichtung zur Klopferkennung wird beschrieben, wie die Ausgangssignale zweier Klopfsensoren zur Klopferkennung verarbeitet werden. Dabei werden in einem Mikroprozessor aus vorhergehenden Klopfsignalen Referenzpegel gebildet, die mit dem aktuellen Ausgangssignal, das einem aufbereiteten Klopfsensorsignal entspricht, verglichen werden. Übersteigt das Signal den Referenzpegel, wird auf Klopfen erkannt und eine entsprechende Ansteuerung beispielsweise der Zündung durchgeführt, die sicherstellt, dass bei den folgenden Verbrennungen kein Klopfen mehr auftritt. Damit die Drehzahlabhängigkeit des Hintergrundsignals und des Klopfsignals berücksichtigt wird und eine optimale Klopferkennung durchgeführt werden kann, wird der Referenzpegel in Abhängigkeit von der Drehzahl verändert, wobei mit steigender Drehzahl auch der Referenzpegel erhöht wird.

Aus der EP-A-0 529 786, der DE 195 49 175 A, der DE 4132 096 A, der DE 33 13 036 A, der DE 30 16 117 A, der US-A-4,481,924, der DE 33 13 036 A1, der US-A-4,770,144, der JP 06249047 A, der US-A-4,770,143 und der US-A-5,811,667 sind jeweils Verfahren zur Nachführung eines Referenzpegels zum Zweck der Klopfregelung bekannt. Keine dieser Schriften offenbart jedoch drei unterschiedliche Verfahren in Abhängigkeit von Betriebszuständen der Brennkraftmaschine.

Vorteile der Erfindung

Das erfindungsgemäße Verfahren zur Klopferkennung mit den Merkmalen des Anspruchs 1 hat den Vorteil, dass unabhängig von der Intensität der Geräusche über den gesamten Arbeitsbereich der Brennkraftmaschine eine zuverlässig Klopferkennung möglich ist. Erzielt wird dieser Vorteil, indem zusätzlich zur üblichen Referenzpegelnachführung eine verbesserte Referenzpegelnachführung bei Dynamik insbesonders für Brennkraftmaschinen mit starker Geräuschzunahme durchgeführt wird. Auch bei Motoren mit überdurchschnittlicher Geräuschentwicklung bzw. in Bereichen mit überdurchschnittlichem Geräuschanstieg wird nicht fälschlicher Weise auf Klopfen erkannt, da auch in diesem Fall in vorteilhafter Weise eine Referenzpegelanpassung erfolgt.

Weitere Vorteile der Erfindung werden durch die in den Unteransprüchen angegebenen Maßnahmen erzielt. Dabei ist besonders vorteilhaft, daß die verbesserte Referenzpegelnachführung bei Dynamik eine schnellere Nachführung des Referenzpegels ermöglicht. Diese schnelle Nachführung wird erhalten, indem der zugegörige Faktor im Dynamikfall gegenüber dem Normalfall verringert wird.

Zeichnung

Die Erfindung ist in der Zeichnung dargestellt und wird in der nachfolgenden Beschreibung näher erläutert.

Im einzelnen zeigt Figur 1 eine mögliche Realisierung einer Vorrichtung zur Klopferkennung, mit der die erfindungsgemäßen Verfahren zur Klopferkennung durchgeführt werden können. In den Figuren 2 und 3 sind zwei erfindungsgemäße Klopferkennungsverfahren als Flußdiagramme dargestellt und Figur 4 zeigt verschiedene Referenzpegelverläufe.

Beschreibung

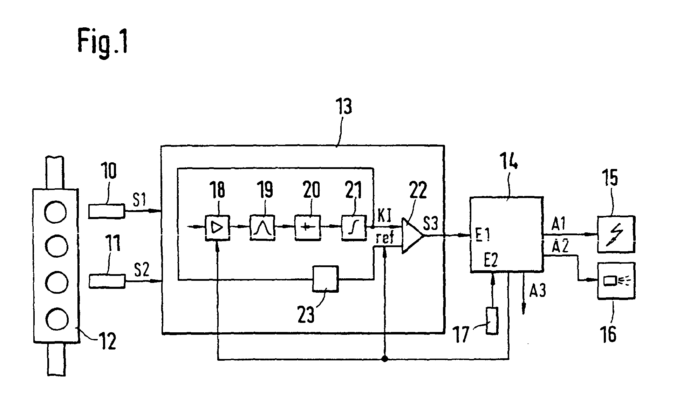

In der in Figur 1 dargestellten Ausführungsform einer Vorrichtung zur Klopferkennung bei einer Brennkraftmaschine sind zwei Klopfsensoren 10, 11, beispielsweise Körperschallsensoren an vorgebbaren Stellen des Motorblocks 12 der Brennkraftmaschine angeordnet. Die Klopfsensoren 10, 11 geben Signale S1, S2 ab, die sowohl vom Motorgeräusch als auch von eventuell vorhandenen Störgeräuschen und von eventuell vorhandenen Klopfgeräuschen abhängen. Zur zuverlässigen Klopferkennung müssen die Signalbestandteile getrennt werden. Dazu werden die Signale S1 und S2 der Klopfsensoren 10, 11 in der Auswerteeinrichtung 13 in geeigneter Weise weiterverarbeitet und es wird am Ausgang der Auswerteeinheit 13 ein Signal S3 erzeugt, das Erkennen läßt, ob Klopfen vorliegt oder nicht.

Die Auswerteeinrichtung 13 kann als diskrete Schaltung aufgebaut sein oder Bestandteil eines Mikrorechners sein. Die Auswerteschaltung 13 ist beispielsweise im Steuergerät der Brennkraftmaschine integriert. Ein Mikrorechner 14, der das Signale S3 der Auswerteeinrichtung 13 weiterverarbeitet, ist beispielsweise ein Mikroprozessor des Steuergeräts. In Abhängigkeit vom Signal S3, das Erkennen läßt, ob Klopfen vorliegt, steuert der Mikrorechner 14 Zündeinrichtungen 15 und/oder Einspritzeinrichtungen 16 und regelt damit den Verbrennungsablauf in den einzelnen Zylindern der Brennkraftmaschine.

Zur optimalen Regelung der Brennkraftmaschine werden dem Mikroprozessor 14 weitere Signale zugeführt, die beispielsweise von einem Sensor 17, beispielsweise einem Drosselklappengeber geliefert werden. Es sind selbstverständlich beliebig viele Sensoren möglich, deren Ausgangssignale dem Mikrorechner nach einer entsprechenden Aufbereitung zugeführt werden und von diesem verarbeitet werden. Im Ausführungsbeispiel nach Figur 1 erfolgt die Signalzuführung jeweils über Eingänge, die mit E1 und E2 bezeichnet sind, als Ausgänge sind die Ausgänge A1, A2 und A3 dargestellt.

In der Auswerteeinrichtung 13 erfolgt die eigentliche Klopferkennung. Die Auswerteeinrichtung 13 umfaßt im gewählten Ausführungsbeispiel wenigstens einen Verstärker 18 mit einstellbaren Verstärkungsfaktor, dem die von den Klopfsensoren 10 und 11 gelieferten Ausgangssignale S1 und S2 zugeführt werden. Dabei wird jeweils das Ausgangssignal des dem aktuell verbrennenden Zylinder über Software zugeordneten Zylinders zugeführt. In einem sich anschließenden Bandpaß 19 werden die verstärkten Signale so gefiltert, daß die Signalanteile mit klopftypischen Frequenzen bevorzugt werden. An den Bandpaß schließt sich eine Demodulationsschaltung 20, beispielsweise ein Gleichrichter an. Die von der Demodulationsschaltung 20 abgegebenen Signale werden im Integrator 21 aufintegriert und die aufintegrierten Signale KI werden an einem ersten Eingang des Komparators 22 gelegt.

Dem anderen Eingang des Komparators 22 wird ein Referenzsignal beziehungsweise ein Referenzpegel Ref der beispielsweise unter Verwendung eines Tiefpasses 23 durch Mittelung von in vorgebbarer Weise aufbereiteten Klopfsensorsignalen gebildet wird. Wie die tatsächlichen Werte des Referenzpegels gebildet werden und welche Werte sie annehmen, ist der Kern der Erfindung und wird im folgen noch näher beschrieben.

Der genaue Aufbau der einzelnen Elemente der Auswerteeinrichtung 13 ist für das Verständnis der Erfindung nicht wesentlich und wird daher nicht näher angegeben. Die Auswerteeinrichtung 13 kann auch komplett als digitale Auswerteeinrichtung, beispielsweise als Mikroprozessor realisiert sein.

Mit Hilfe der in Figur 1 dargestellten Vorrichtung läuft die Klopferkennung wie folgt ab: Die Klopfsensoren 10, 11 registrieren die Geräusche, die von der Brennkraftmaschine verursacht werden und geben entsprechende Signale S1 und S2 an die Auswerteeinrichtung 13 ab. Diese Signale werden in geeigneter Weise gefiltert und verstärkt. Der Vergleich der integrierten Klopfsignale KI mit dem Referenzpegel Ref ergibt das Signal S3, das erkennen läßt, ob Klopfen aufgetreten ist.

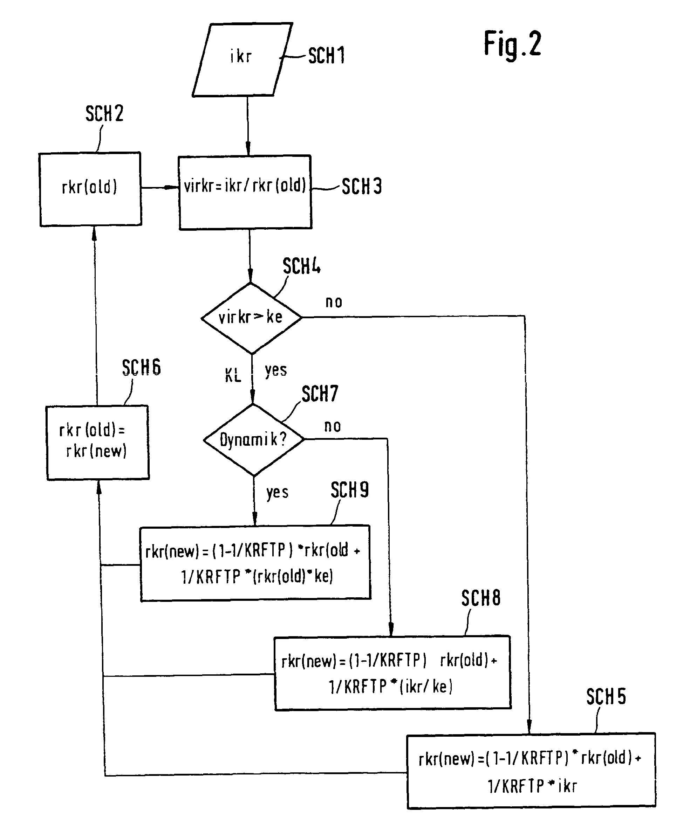

Die genaue Vorgehensweise bei der Klopferkennung bei Brennkraftmaschinen, die als Körperschallsensoren arbeitende Klopfsensoren aufweisen, läßt sich beispielsweise mit Hilfe des in Figur 2 dargestellten Ablaufdiagramms erläutern. Bei diesem Ausführungsbeispiel wird in einem ersten Schritt SCH1 das Geräusch ikr der aktuellen Verbrennung ermittelt. Aus dem Geräusch ikr wird in einem Schritt SCH3 das Verhältnis virkr aus dem Geräusch ikr der aktuellen Verbrennung und dem über mehrere Verbrennungen des selben Zylinders gemittelten Geräusch, dem sogenannten Referenzpegel rkr gebildet, wobei zuvor im Schritt SCH2 der Referenzpegel rkr(old) eingelesen wird.

Das im Schritt SCH3 berechnete Verhältnis virkr wird im Schritt SCH4 daraufhin untersucht, ob es größer ist als die Klopferkennungsschwelle ke. Überschreitet das Verhältnis virkr = ikr/rkr(old) die Klopferkennungsschwelle ke, so wird auf Klopfen erkannt und ein Signal KL abgegeben. Es gilt also auch: wenn ikr größer ist als rkr(old)*ke wird Klopfen erkannt und ein entsprechendes Signal KL abgegeben

Die Berechnung des Referenzpegels rkr(old) im klopffreien Betrieb erfolgt also wenn im Schritt SCH4 erkannt wird, daß vikr nicht größer ist als ke in Schritt SCH5 rekursiv, gemäß der Formel:

$$rkr(new) = (1-1/KRFTP)*rkr(old) + 1/KRFTP*ikr.$$

Die Größe KRFTP wird als sogenannter Nachführfaktor bezeichnet. Der Nachführfaktor kann in geeigneter Weise brennkraftmaschinen-spezifisch angepaßt werden.

Der so gebildete neue Referenzpegel rkr(new) repräsentiert das Grundgeräusch der Brennkraftmaschine ohne Klopfen. Beim nächsten Programmdurchlauf wird der im Schritt SCH5 berechnete Referenzpegel rkr(new) im Schritt SCH6 als Referenzpegel rkr(old) berücksichtigt und für die nächste Berechnung des Verhälnisses virkr verwendet Wird im Schritt SCH4 eine Verbrennung als klopfend detektiert, wird das für diese Verbrennung gemessene Geräusch ikr nicht vollständig in den Referenzpegel rkr eingerechnet. Wie die Einrechnung im klopfenden Fall erfolgt, hängt davon ab. ob Dynamik vorliegt oder nicht. Dazu wird im Schritt SCH7 überprüft, ob sich die Brennkraftmaschine in einem dynamische Betriebszustand befindet. Für die Dynamikerkennung kann beispielsweise überprüft werden, ob sich die Drehzahl wesentlich verändert.

Liegt kein Dynamikfall vor, erfolgt die Einrechnung des gemessenen Geräusches ikr, indem es durch den Faktor ke geteilt wird, um einen Anstieg des Referenzpegel rkr durch das Klopfgeräusch zu vermeiden. In diesem Fall berechnet sich der neue Wert für den Referenzpegel rkr(new) in Schritt SCH8 nach der Formel

$$\mathrm{rkr(new)\ =\ (1-1/KRFTP)*rkr(old)\ +\ 1/KRFTP*(ikr/ke).}$$

Auf die Einrechung klopfender Verbrennungen kann im Prinzip nicht verzichtet werden, da deren Geräusch im Fall von Dynamik auch die natürlich Geräuschzunahme der Brennkraftmaschine enthält und entsprechend miterfaßt werden muß.

Damit es bei schneller und starker Zunahme des Grundgeräuschs bei Dynamik (Schritt SCH7 zeigt, daß Dynamik vorliegt) nicht zu Fehlerkennungen kommt, damit also nicht plötzlich lautere Verbrennungen fälschlicherweise als Klopfen erkannt werden, werden zwei Maßnahmen für die Dauer der Dynamik ergriffen: Die Referenzpegelnachführung wird durch Wahl eines kleineren Faktors KRFTP beschleunigt und die Klopferkennungsschwelle wird erhöht.

Trotz dieser Gegenmaßnahmen gegen irrtümliches Klopferkennen kann es bei Brennkraftmaschinen bzw. Motoren mit überdurchschnittlichem Geräuschanstieg, beispielsweise in Folge von Kolbenkippen, zu Fehlerkennungen kommen. Eine fälschlich als Klopfen erkannte Verbrennung führt jedoch wegen der vorstehend beschriebenen Wichtung des Geräuschs der aktuellen Verbrennung ikr mit dem Faktor ke bei Einrechnung in den Referenzpegel rkr zu einer ungerechtfertigten Verzögerung der Nachführung des berechneten Grundgeräuschs rkr. Diese Diskrepanz zwischen tatsächlichem und berechnetem Grundgeräusch kann in der Folge zu weiteren Fehlerkennungen führen. Da jede Klopferkennung letztendlich eine Zündwinkelverstellung nach spät bewirkt, kann es durch irrtümlich erkanntes Klopfen zu einer entsprechenden Einbuße von Leistungs- und Wirkungsgrad kommen, die im Fall von Fehlerkennungen völlig unnötig sind. Es wird daher erfindungsgemäß die bisher beschriebene Berechnung des Referenzpegels im Fall der im Schritt SCH 7 erkannten Dynamik nach einem anderen Verfahren durchgeführt, wodurch Fehlerkennungen verringert werden und gleichzeitig nach wie vor eine Erkennung tatsächlichen Klopfens sichergestellt wird.

Je nachem ob ein Dynamikfall vorliegt oder nicht wird der neue Referenzpegelwert entweder nach der im Schritt SCH8 angegebenen Formel oder nach der in Schritt SCH9 angegebenen Formel durchgeführt. Im Schritt SCH6 wird dann jeweils der alte Wert des Referenzpegels rkr(old) durch den neuen Wert rkr(new) ersetzt und dieser im Schritt SCH3 wieder zur Verhältnisbildung verwendet.

Das beschriebene Verfahren ergibt somit bei erkanntem Klopfen, bei tatsächlichem Klopfen oder Fehlerkennung eine Berechnung für den Referenzpegel rkr(new) im Dynamikfall nach einer modifizierten Formel, es gilt:

$$\mathrm{rkr(new)\ =\ (1-1/KRFTP)*rkr(old)\ +\ 1/KRFTP*(rkr(old)*ke.}$$

Dabei entspricht die Größe rkr(old)*ke gerade dem Geräuschniveau, das noch nicht als klopfend erkannt werden würde. Es wird also anders als bei einem Verfahren, bei dem zwischen Dynamik und Nicht-Dynamik nicht unterschieden wird, ein größerer Wert zur Referenzpegelnachführung eingerechnet, der sich jedoch definiert aus dem gemittelten Geräuschniveau ergibt. Durch dieses Verfahren zur Referenzpegelbestimmung werden irrtümliche Klopferkennungen und damit unnötige Leistungs- und Wirkungsgradeinbußen verhindert.

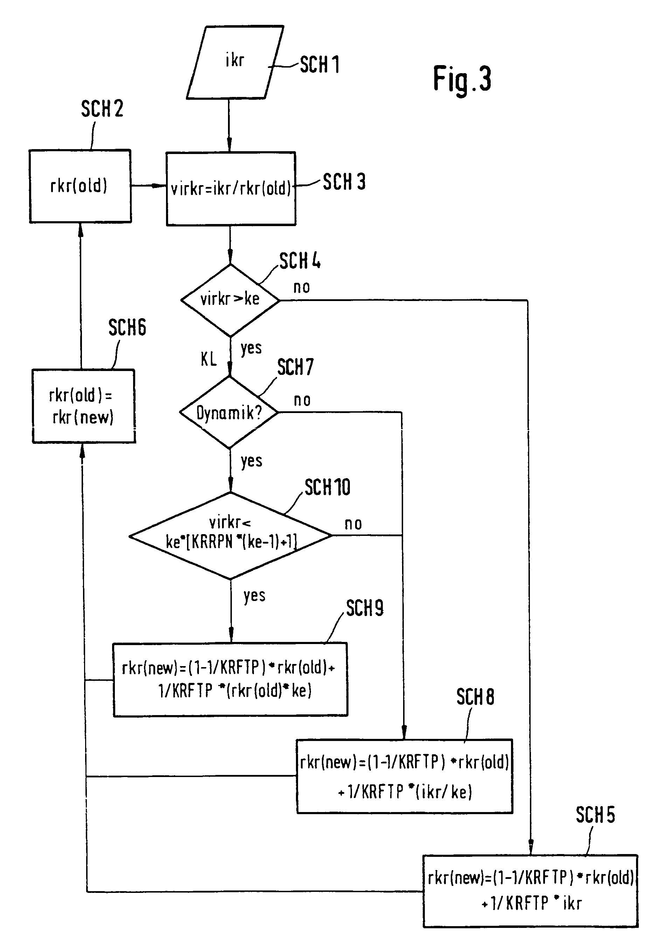

In Figur 3 ist ein weiteres Ausführungsbeispiel der Erfindung dargestellt, das eine Referenzpegelnachführung bei Dynamik berücksichtigt. Dieses Verfahren unterscheidet sich von dem in Figur 2 dargestellten lediglich durch den zusätzlichen Schritt SCH10, der eine zusätzliche Schwellwertabfrage beinhaltet. Wird im Schritt SCH4 Klopfen erkannt und im Schritt SCH7 Dynamik erkannt (entweder tatsächlich vorhandenes Klopfen oder Fehlerkennungen), dann wird der Schritt SCH10 daran anschließend durchgeführt. Dabei wird der Wert virkr mit einer Schwelle ke*(KRRPN*(ke-1) +1) verglichen, wobei der Faktor KRRPN einen Wertebereich (0,1) annehmen kann, der zwischen ke und $ke^2$ liegt. Wird diese Schwelle nicht überschritten, wird der Referenzpegel mit der in Schritt SCH9 angegebenen Formel berechnet, es gilt:

$$\mathrm{rkr(new)\ =\ (1-1/KRFTP)*rkr(old)\ +\ 1/KRFTP*(rkr(old)*ke).}$$

Wird dagegen dieser Schwellwert durch das Verhältnis virkr auch noch überschritten, wird für die Berechnung des neuen Referenzwerts die in Schritt SCH8 angegebene Formel verwendet, sie entspricht der bisher bei erkannten Klopfen verwendeten Formel. Diese Formel lautet:

$$rkr(new) = (1-1/KRFTP)*rkr(old) + 1/KRFTP*(ikr/ke).$$

Durch die Einführung dieser weiteren variablen Schwelle kann mit KRRPN = 0 das bisherige Verhalten der Referenzpegelnachführung realisiert werden, mit KRRPN = 1 wird dagegen eine maximal schnelle Referenzpegelnachführung erzielt, wie sie bei Brennkraftmaschinen bzw. Motoren mit schnellem Geräuschanstieg bei Drehzahldynamik wünschenswert ist. Dadurch wird die Wahrscheinlichkeit von Fehlerkennungen bei Dynamik über einen längeren Zeitraum und damit verbundene Leistungs- und Wirkungsgradeinbußen reduziert.

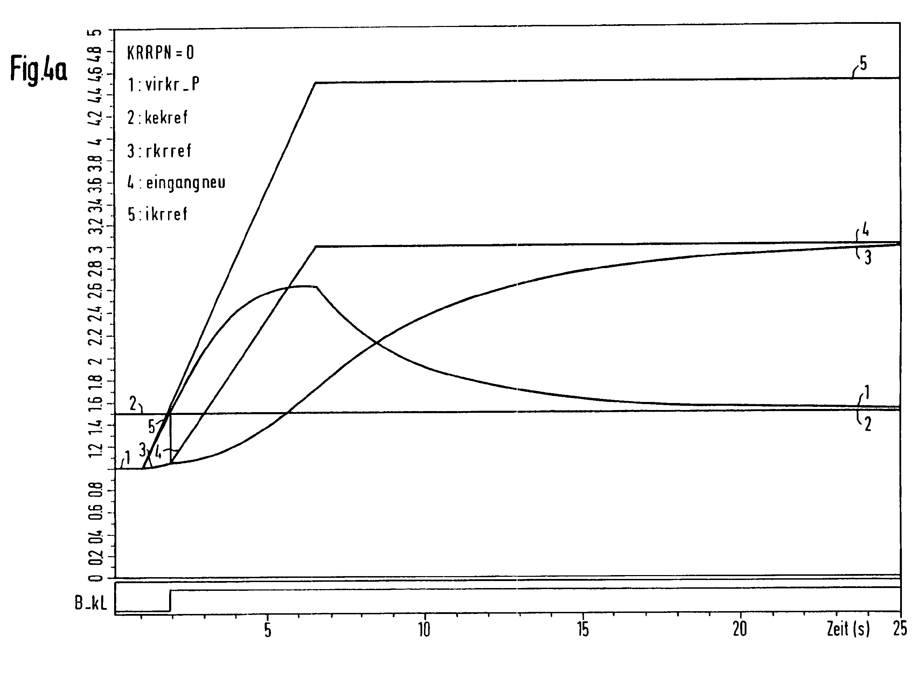

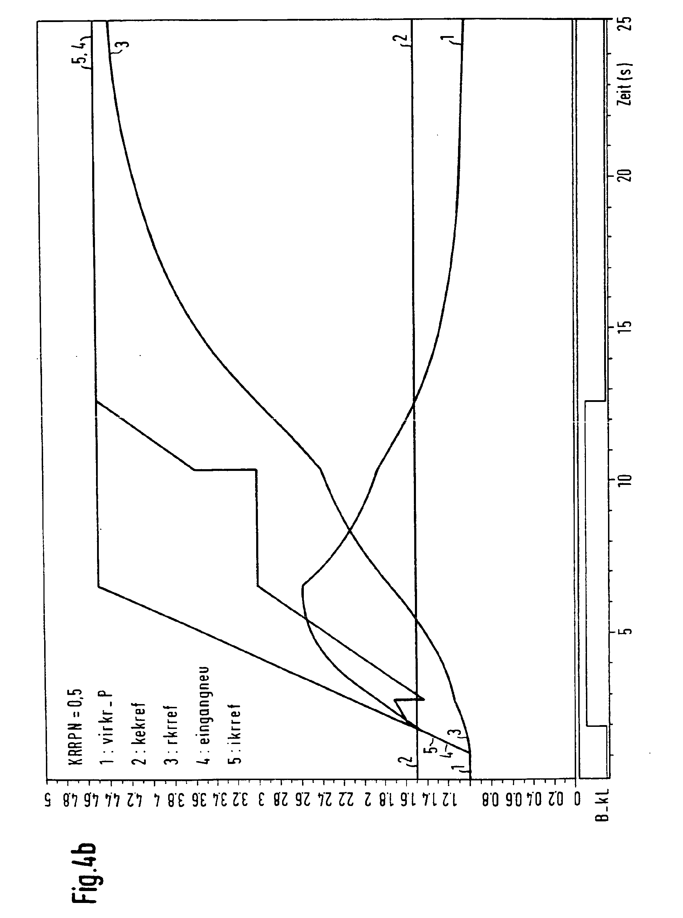

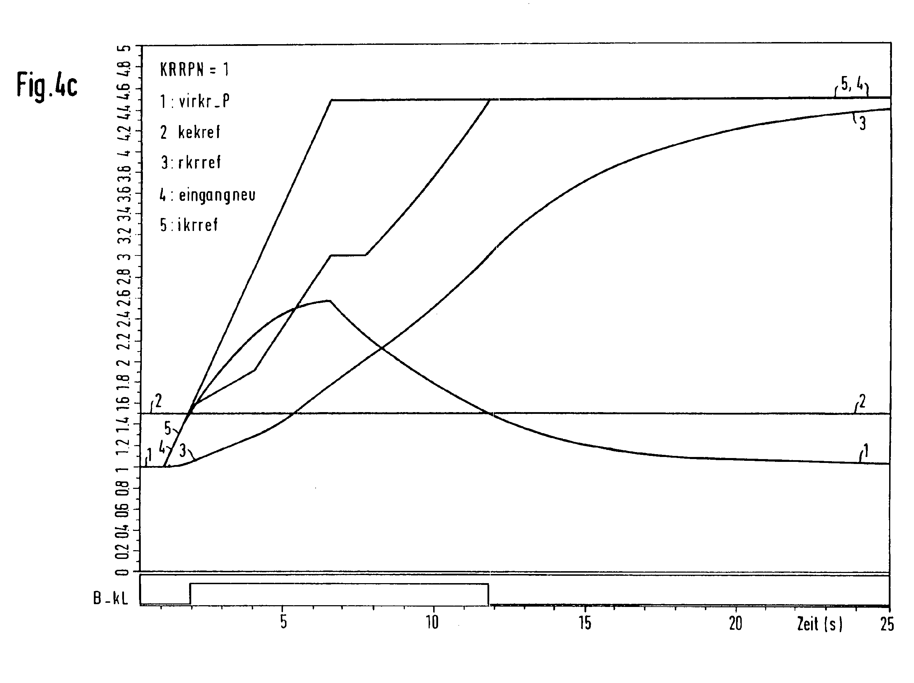

In Figur 4 sind durch Simulation ermittelte Beispiele für den Verlauf der Größen

virkr_P:           Verhältnis aus dem Geräusch ikr der aktuellen Verbrennnung und dem Mittelwert des Geräuschs der letzten Verbrennung des selben Zylinders,

kekref:           Klopferkennungsschwelle

rkrref:           Referenzpegel= gleitender Mittelwert der letzten Verbrennungen

eingangneu:      Wert, der zur Berechnung des aktuellen Referenzpegels genutzt wird

und ikrref:       Geräusch der aktuellen Verbrennung

aufgetragen, wobei für den Faktor KRRPN jeweils ein Wert von 0 (Figur 4a), 0,5 (Figur 4b) und 1,0 (Figur 4c) gewählt wurde. Mit B_kl wird angegeben, ob auf Klopfen erkannt ist (High-Pegel) oder nicht(Low-Pegel).

**Patentansprüche**

1. Verfahren zur Klopferkennung bei einer Brennkraftmaschine mit wenigstens einem Klopfsensor und einer diesem nachgeschalteten Auswerteeinrichtung, die wenigstens ein Vergleichsmittel umfasst, das das aufbereitete Ausgangssignal des Klopfsensors mit einem variablen Referenzpegel, der abhängig von vorhergehenden Ausgangssignalen des Klopfsensors gebildet wird, vergleicht, wobei der Referenzpegel dem Vergleichsmittel über einen Tiefpass zugeführt wird und das Vergleichsmittel in Abhängigkeit vom Vergleichsergebnis Klopfen erkennt, **dadurch gekennzeichnet, dass** die Nachführung des Referenzpegels oder die Berechnung des Eingangssignales des Tiefpasses nach wenigstens drei unterschiedlichen Verfahren erfolgt, wobei ein erstes Verfahren verwendet wird wenn kein Klopfen festgestellt wird, ein zweites Verfahren verwendet wird wenn Klopfen festgestellt wird und ein Schwellwert für die Dynamik der Brennkraftmaschine nicht überschritten wird und ein drittes Verfahren verwendet wird wenn Klopfen festgestellt wird und ein Schwellwert für die Dynamik der Brennkraftmaschine überschritten wird.

2. Verfahren zur nach Anspruch 1, **dadurch gekennzeichnet, dass** der Referenzpegel rkr(new) nach einer der Gleichungen:

     1: rkr(new) = (1-1/KRFTP)*rkr(old) + 1/KRFTP*ikr, für das erste Verfahren,
     2: rkr(new) = (1-1/KRFTP)*rkr(old) + 1/KRFTP*(ikr/ke)für das zweite Verfahren, oder
     3: rkr(new) = (1-1/KRFTP)*rkr(old)+1/KRFTP*(rkr(old)*(ke), für das dritte Verfahren berechnet wird,

wobei rkr(old) der vorherige Referenzpegel, KRFTP der Nachführfaktor, ikr das Geräusch der aktuellen Verbrennung und ke ein Faktor ist.

3. Verfahren zur Klopferkennung nach Anspruch 2, **dadurch gekennzeichnet, dass** Klopfen erkannt wird, wenn das Verhältnis virkr, das aus dem aktuellen Klopfwert ikr und dem vorherigen Referenzpegel rkr(old) gebildet wird, einen vorgebbaren Wert ke überschreitet.

4. Verfahren zur Klopferkennung nach einem der vorhergehenden Ansprüche, **dadurch gekennzeichnet, dass** bei der Festlegung des neuen Referenzpegels auch vorherige Werte mitberücksichtigt werden, die bei erkanntem Klopfen ermittelt wurden.

5. Verfahren zur Klopferkennung nach Anspruch 3, **dadurch gekennzeichnet, dass** bei der Bildung des Referenzpegels rkr zusätzlich berücksichtigt wird, ob das Verhältnis virkr größer ist als ein Schwellwert ke*(KRRPN*(ke-1) + 1), wobei ke die Klopferkennungsschwelle und KRRPN Faktor mit einem Wert zwischen 0 und 1 ist.

**Claims**

1. Method for knock detection in an internal combustion engine having at least one knock sensor and an evaluation device which is connected downstream thereof comprises at least one comparing means which compares the conditioned output signal of the knock sensor with a variable reference level which is formed as a function of preceding output signals of the knock sensor, the reference level being fed to the comparing means via a lowpass filter, and the comparing means detecting knocking as a function of the comparison result, **characterized in that** the correction of the reference level or the calculation of the input signal of the lowpass filter is performed according to at least three different methods, a first method being used when no knocking is determined, a second method being used when knocking is determined and a threshold value for the dynamics of the internal combustion engine is not exceeded, and a third method being used when knocking is determined and a threshold value for the dynamics of the internal combustion engine is exceeded.

2. Method for knock detection according to Claim 1, **characterized in that** the reference level rkr(new) is calculated using one of the equations:

1: rkr(new) = (1-1/KRFTP)*rkr(old) + 1/KRFTP*ikr, for the first method,
2: rkr(new) = (1-1)/KRFTP)*rkr(old) + 1/KRFTP*(ikr/ke) for the second method, or
3: rkr(new) = (1-1/KRFTP)*rkr(old)+1/KRFTP*©rkr(old)* (ke), for the third method,

rkr(old) being the previous reference level, KRFTP being the correction factor, ikr being the noise of the current combustion, ke being a factor.

3. Method for knock detection according to Claim 2, **characterized in that** knocking is detected when the ratio virkr, which is formed from the current knock value ikr and the previous reference level rkr(old), exceeds a prescribable value ke.

4. Method for knock detection according to one of the preceding claims, **characterized in that** in fixing the new reference level account is also taken of previous values that have been determined in the case of a detected knocking.

5. Method for knock detection according to Claim 3, **characterized in that** during the formation of the reference level rkr it is additionally taken into account whether the ratio virkr is greater than a threshold value ke*(KRRPN*(ke-1) + 1), ke being the knock detection threshold and KRRPN being a factor with a value between 0 and 1.

**Revendications**

1. Procédé de détection de cliquetis dans un moteur à combustion interne, comprenant au moins un capteur de cliquetis et un dispositif d'analyse monté après celui-ci, qui comprend au moins un moyen comparateur, qui compare le signal de sortie fourni par le capteur de cliquetis à un niveau de référence variable, qui est formé en fonction de signaux de sortie précédents du capteur de cliquetis, le niveau de référence étant acheminé au moyen comparateur par le biais d'un filtre passe-bas, et le moyen comparateur détectant un cliquetis en fonction du résultat de la comparaison, **caractérisé en ce que** la poursuite du niveau de référence ou le calcul du signal d'entrée du filtre passe-bas s'effectuent selon au moins trois procédés différents, un premier procédé étant utilisé lorsque aucun cliquetis n'est constaté, un deuxième procédé étant utilisé lorsqu'un cliquetis est constaté et qu'une valeur seuil pour la dynamique du moteur à combustion interne n'est pas dépassée, et un troisième procédé étant utilisé lorsqu'un cliquetis est constaté et qu'une valeur seuil pour la dynamique du moteur à combustion interne est dépassée.

2. Procédé de détection de cliquetis selon la revendication 1, **caractérisé en ce que** le niveau de référence rkr(new) est calculé conformément à l'une des relations suivantes :

1: rkr(new) = (1-1/KRFTP)*rkr(old) + 1/KRFTP*ikr, pour le premier procédé,

2: rkr(new) = (1-1/KRFTP)*rkr(old) + 1/KRFTP*(ikr/ke) pour le deuxième procédé, ou

3: rkr(new) = (1-1/KRFTP)*rkr(old) + 1/KRFTP*(rkr(old)*(ke), pour le troisième procédé,

rkr(old) étant le niveau de référence précédent, KRFTP étant le facteur de poursuite, ikr étant le bruit de la combustion actuelle et ke étant un facteur.

**3.** Procédé de détection de cliquetis selon la revendication 2, **caractérisé en ce que** le cliquetis est détecté quand le rapport virkr, qui est obtenu à partir de la valeur de cliquetis actuelle ikr et du niveau de référence précédent rkr (old), dépasse une valeur prédéfinissable ke.

**4.** Procédé de détection de cliquetis selon l'une quelconque des revendications précédentes, **caractérisé en ce que** lors de l'établissement du nouveau niveau de référence, on tient compte aussi de valeurs précédentes, qui ont été déterminées lors d'une détection d'un cliquetis.

**5.** Procédé de détection de cliquetis selon la revendication 3, **caractérisé en ce que** lors de la formation du niveau de référence rkr, on considère en outre si le rapport virkr est supérieur à une valeur seuil ke*(KRRPN*(ke-1)+1), ke étant le seuil de détection de cliquetis et KRRPN étant un facteur ayant une valeur comprise entre 0 et 1.

EP 1 208 364 B1

Fig.1

8

Fig.2

ikr — SCH1

SCH2

rkr(old) → virkr = ikr / rkr (old) — SCH3

SCH4

virkr > ke — no

KL | yes

SCH7

Dynamik? — no

yes

SCH9

$rkr(new) = (1-1/KRFTP) * rkr(old) + 1/KRFTP * (rkr(old) * ke)$

SCH6

rkr(old) = rkr(new)

SCH8

$rkr(new) = (1-1/KRFTP) \; rkr(old) + 1/KRFTP * (ikr / ke)$

SCH5

$rkr(new) = (1-1/KRFTP) * rkr(old) + 1/KRFTP * ikr$

## Fig.3

$$ikr \quad \text{— SCH 1}$$

SCH 2

$$rkr(old)$$

$$virkr = ikr/rkr(old) \quad \text{— SCH 3}$$

SCH 4

$$virkr > ke$$ — no

KL — yes

SCH 6

$$rkr(old) = rkr(new)$$

SCH 7

$$Dynamik?$$ — no

yes

SCH 10

$$virkr < ke \cdot [KRRPN \cdot (ke-1)+1]$$ — no

yes

SCH 9

$$rkr(new) = (1-1/KRFTP) \cdot rkr(old) + 1/KRFTP \cdot (rkr(old) \cdot ke)$$

SCH 8

$$rkr(new) = (1-1/KRFTP) \cdot rkr(old) + 1/KRFTP \cdot (ikr/ke)$$

SCH 5

$$rkr(new) = (1-1/KRFTP) \cdot rkr(old) + 1/KRFTP \cdot ikr$$

Fig.4a

KRRPN = 0
1: virkr_P
2: kekref
3: rkrref
4: eingangneu
5: ikrref

Fig.4b

KRRPN = 0,5

1 : virkr_P
2 : kekref
3 : rkrref
4 : eingangneu
5 : ikrref

Fig.4c

KRRPN = 1

1 : virkr_P

2 : kekref

3 : rkrref

4 : eingangneu

5 : ikrref

B_kL

Zeit (s)

EP 1 208 364 B1

**EP 1 208 364 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE P4332711
- EP 0529786 A
- DE 19549175 A
- DE 4132096 A
- DE 3313036 A
- DE 3016117 A
- US 4481924 A
- DE 3313036 A1
- US 4770144 A
- JP 06249047 A
- US 4770143 A
- US 5811667 A